# EUROPEAN PATENT SPECIFICATION

(11) **EP 4 325 815 B1**
(45) Date of publication and mention of the grant of the patent: **02.12.2026**
(21) Application number: 23191155.3
(22) Date of filing: 11.08.2023
(51) Int. Cl.: H04L 67/306, G06F 40/30, H04M 3/22

(54) **ACTIVE CALL LAWFUL INTERCEPTION AND PRESERVATION TECHNIQUE**
TECHNIK ZUM AKTIVEN LEGALEN ABFANGEN UND ZUR KONSERVIERUNG VON ANRUFEN
TECHNIQUE D'INTERCEPTION ET DE CONSERVATION LÉGALE D'APPEL ACTIF

(30) Priority: 18.08.2022 US 202217890779
(43) Date of publication of application: 21.02.2024
(73) Proprietor: Mitel Networks Corporation, Kanata, ON K2K 3K1 (CA)
(72) Inventor: GUDIPATI, Venkata Ajaresh, Bangalore (IN)
(74) Representative: McDougall, James

(56) References cited:
- US-A1- 2017 264 739
- US-A1- 2020 177 732
- US-B1- 8 284 905

## Description

### FIELD

This disclosure relates to systems and methods for detecting threatening and/or illegal calls. When such a call is detected, it may be routed to another person who would be a silent listener on the call and/or recorded and stored.

### BACKGROUND

In general, emergency calls made to a specific emergency number (such as 911) are recorded and monitored by authorities such as the police or other emergency services personnel. However, normal calls between individuals are usually not monitored. If an organization member (referred to herein as a "first user"), such as an employee or contractor, receives a threatening call from outside of the organization, there is no automated way to immediately alert another person, such as a supervisor, human resources person, or law enforcement personnel, during the call. Nor is there is a simple way to record and store the call, or to determine its threat level, or to determine whether the language used in the call is illegal.

Currently, if the call is not recorded or traced immediately, it is difficult for the first user who received the call to describe or provide evidence to trace the call or determine if the call was illegal. Normally, the first user must manually report the call after it is completed to someone else, such as a legal authority, with all details recalled so the person who made the call can be traced, if possible.

Any discussion of problems provided in this section has been included solely for the purpose of providing a background for the present disclosure and should not be taken as an admission that any or all of this background was known at the time the invention was conceived.

US 2020/177732 A1 discloses a system for detecting harassing communication . The system receives communication data from a first customer service representative terminal or a customer communication device and determines, based at least in part on the communication data and stored communication data, that the communication data comprises harassing content. The system, in response to determining that the communication data comprises harassing content, transmits to a second customer service representative terminal, a notification indicating that the communication data comprises harassing content.

US 8284905 B1 discloses a method and apparatus for monitoring conversations to control telecommunications is provided. One embodiment comprises a method for identifying undesirable data within voice communications to control telecommunications, comprising processing voice communications between at least two entities and analyzing the voice communications to determine indicia of undesirable data.

US2017/264739 A1 discloses a method and system for implementing self-learning corrections facility call monitoring. In some embodiments, a method might comprise an automated call monitor monitoring a voice or video call between a call participant and a prison inmate, and analyzing at least one of conversation content of the call, voice characteristics of the call participant and/or the prison inmate, and/or (for video calls) body language of the parties to the call, to determine whether the conversation content, voice characteristics, and/or body language are indicative of impermissible content and/or impermissible conduct.

### SUMMARY

The invention is set out in the appended set of claims.

### BRIEF DESCRIPTION OF THE DRAWING FIGURES

The subject matter of the present disclosure is particularly pointed out and distinctly claimed in the concluding portion of this specification. A more complete understanding of the present disclosure, however, may best be obtained by referring to the detailed description and claims when considered in connection with the drawing figures, wherein like numerals denote like elements and wherein:
FIG. 1 is a block diagram of a prior art system.
FIG. 2 is a block diagram of a system in accordance with aspects of this disclosure.
FIG. 3 is a block diagram of options for routing a threatening call.
FIG. 4 is a block of an alternative system in accordance with aspects of this disclosure.
FIG. 5 is a block diagram of an alternative system in accordance with aspects of this disclosure that includes a social media network.
FIG. 6 is a block diagram of an exemplary process according to aspects of this disclosure.
FIG. 7 illustrates a user device with functions according to aspects of this disclosure.

It will be appreciated that elements in the figures are illustrated for simplicity and clarity and have not necessarily been drawn to scale. For example, the dimensions of some of the elements in the figures may be exaggerated relative to other elements to help to improve understanding of illustrated embodiments of the present invention.

### DETAILED DESCRIPTION OF EXEMPLARY EMBODIMENTS

The description of embodiments of the present disclosure provided herein is merely exemplary and is intended for purpose of illustration only; the following description is not intended to limit the scope of the invention disclosed herein. Moreover, recitation of multiple embodiments having stated features is not intended to exclude other embodiments having additional features or other embodiments incorporating different combinations of the stated features.

The systems and methods herein addresses the problem of organization members receiving threatening phone calls. A system and method according to this disclosure monitors calls and analyzes them for threatening and/or illegal language. If such language is identified, the system and method (1) provides the user with interface options, and/or (2) automatically activates one or more interfacing options.

With the proposed solutions, a call can be identified as threatening and/or illegal during the call itself and the call and/or information about the call can be (1) recorded and stored, and/or (2) routed to one or more other persons who can listen silently, gather information about the call, and possibly take immediate action regarding the call. If the call is determined to be illegal, law enforcement may be alerted during the call, in which case immediate action could potentially be taken against the person making the illegal call.

One option provided by a system and method of this disclosure is to record and store all or part of the call for future reference. The amount of the call recorded can be configurable by the system with some default value such as five minutes. Cached information regarding the call may be included in the recording.

In some aspects of this disclosure, there are selected users of the organization whose calls are monitored. Such users (each a "first user") could be executives, customer service personnel, persons who work in critical conditions, or other selected users. This disclosure, however, is not limited to having selected users.

Instead of monitoring all or a random subset of calls, the system and method can be interfaced with and use publicly-available social media content to identify suspended accounts or threatening language used against the first user on social media. This can provide indicators if the user from outside the organization making the call (referred to herein as a "second user") is making threats against the first user.

As used herein, the terms application, module, analyzer, engine, and the like can refer to computer program instructions, encoded on computer storage medium for execution by, or to control the operation of, data processing apparatus. Alternatively or additionally, the program instructions can be encoded on an artificially-generated propagated signal, e.g., a machine-generated electrical, optical, or electromagnetic signal, which is generated to encode information for transmission to suitable receiver apparatus for execution by a data processing apparatus. A computer storage medium can be, or be included in, a computer-readable storage device, a computer-readable storage substrate, a random or serial access memory array or device, or a combination of one or more of the substrates and devices. Moreover, while a computer storage medium is not a propagated signal, a computer storage medium can be a source or destination of computer program instructions encoded in an artificially-generated propagated signal. The computer storage medium is non-transitory and can also be, or be included in, one or more separate physical components or media (e.g., solid-state memory that forms part of a device, disks, or other storage devices).

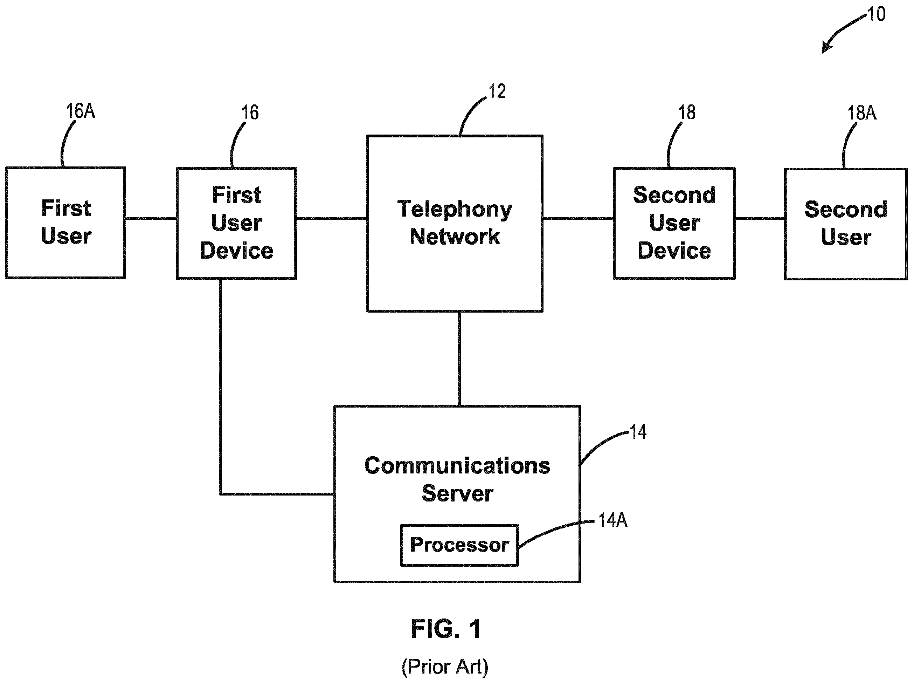

FIG. 1 is a block diagram of an existing, prior art, system 10 that includes a telephony network 12 (which can be any type of telephone system capable of connecting user devices, such as cell phones, land-line phones, or computers), a communications server 14 that is local to an organization (such as a business, charity, or governmental organization) such that, for example, internal calls can be routed through server 14 without going through the telephony network 12. Communications server 14 as shown is in communication with telephony network 12 and has a processor 14A.

A first user device 16 is assigned to first user 16A, who is a member (such as an employee or contractor) of the organization to which communications server 14 is assigned.

First user device 16 may be any type of telephonic device, such as a cell phone, land-line phone, or computer that is in communication with one or both of telephony network 12 and communications server 14. Calls to and from first user device 16 may be routed through communications server 14 to and from telephony network 12, or routed directly to and from telephony network 12 to first user device 16.

A second user device 18 is assigned to a second user 18A, who is not an organization member. Second user device 18 is in communication with telephony network 12 and can contact (or communicate with) first user device 16 through telephony network 12. Second user device 18 is not in direct communication with communications server 14.

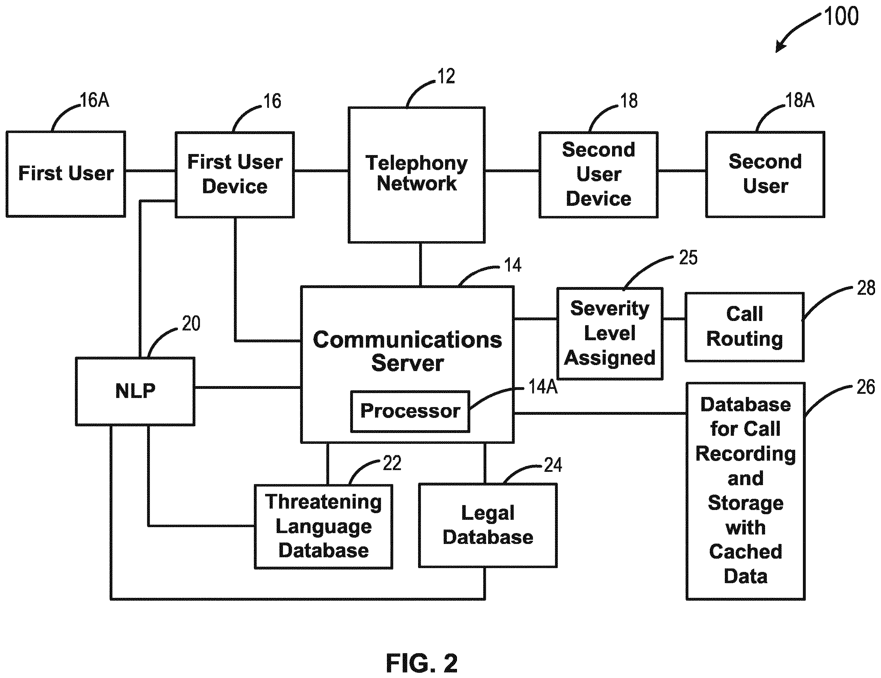

FIG. 2 shows a system 100 according to aspects of this disclosure. As with system 10, system 100 has telephony network 12, communications server 14, first user device 16 assigned to first user 16A, and second user device 18 assigned to second user 18A.

System 100 further includes devices configured to detect, route, and record threatening calls from second user device 18 made to first user device 16. System 100 accomplishes this by (1) analyzing the language used by the second user 18A by a natural language processor (NLP) 20, and (2) comparing the language used by second user 18A to language (which includes stored words and/or phrases) stored in a threatening language database 22 and/or a legal database 24. If the language used by second user 18A is determined to be threatening or illegal, communications server 14, via processor 14A, may automatically route the call and/or record and store the call, or the first user 16A may have the option to route the call and/or record and store the call.

System 100 includes NLP 20 that can communicate directly with first user device 16, or that can communicate with first user device 16 through communications server 14. NLP 20 is also in direct communication with, or indirect communication with (1) communications server 14, (2) threatening language database 22, and (3) legal database 24 (which is optional).

Threatening language database 22 contains words and/or phrases that are considered to be threatening in nature, and such words and/or phrases can be determined by the organization, or by another entity and used by the organization in database 22. Such words and/or phrases may include profane and/or unacceptable racial, religious, violent, or ethnic terms.

Legal language database 24 includes words and/or phrases that are considered illegal, and the illegality may be determined based on the laws where first user 16A is located or where the organization is located. Legal database 24 may include language that constitutes an overt threat of violence and/or dishonest offers (such as a request to send money for a dishonest purpose) or to steal passwords or steal other organizational information.

Threatening language database 22 and legal database 24 are in communication with processor 14A of communications server 14. Threatening language database 22 and legal database 24 may be resident on processor 14A or independent of processor 14A. Processor 14A compares the language of second user 18A as analyzed by NLP 20 to the language in one or both of threatening language database 22 and legal database 24 to determine if the language of second user 18A is threatening and/or illegal. If the language is not threatening and/or illegal no further action is taken.

If the language of second user 18A is threatening and/or illegal, processor 14A of system 100 (or system 200 and 300, described below) may ascribe a severity level of, for example, 1-3 or 1-5, wherein 3 or 5, respectively, would be the highest severity and 1 would be the lowest severity. The severity level would be assigned by processor 14A based on the type and amount of threatening and/or illegal language used by second user 18A.

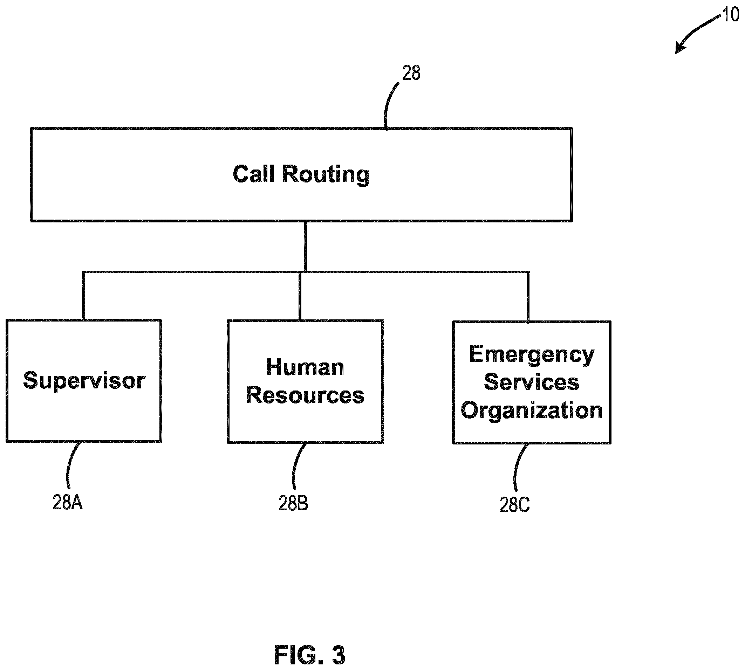

Based on the severity level assigned by processor 14A, first user 16A or communications server 14 may route the call to one or more different entities (or persons) to listen to the call as a silent listener, which means that second user 18A does not know that there is an additional listener other than first user 16A. As shown, for example, in FIG. 3, the silent listener may be one or more of the supervisor 28A of first user 16A, a person 28B in the human resources department of the organization, and someone 28C at an emergency services organization, such as the police, organizational security, or a federal or state agency.

Turning again to FIG. 2, if the call is threatening and/or illegal first user 16A or processor 14A may instruct that the call be recorded and stored, along with any cached data related to the call, in database 26. Cached data may include, but is not limited to (1) the phone number of second user device 18, (2) the name of second user 18A, (3) the owner name associated with second user device 18, (3) the internet protocol (IP) address of second user device 18, and (4) the geographical location (which can be determined by a global positioning system (GPS)) of the second user device 18. Any amount of the call and cached data may be recorded and stored, and they system may be set for a default value such as sixty seconds of recording time. The system may also record the call starting from when cached data first becomes available and stop at the end of the call.

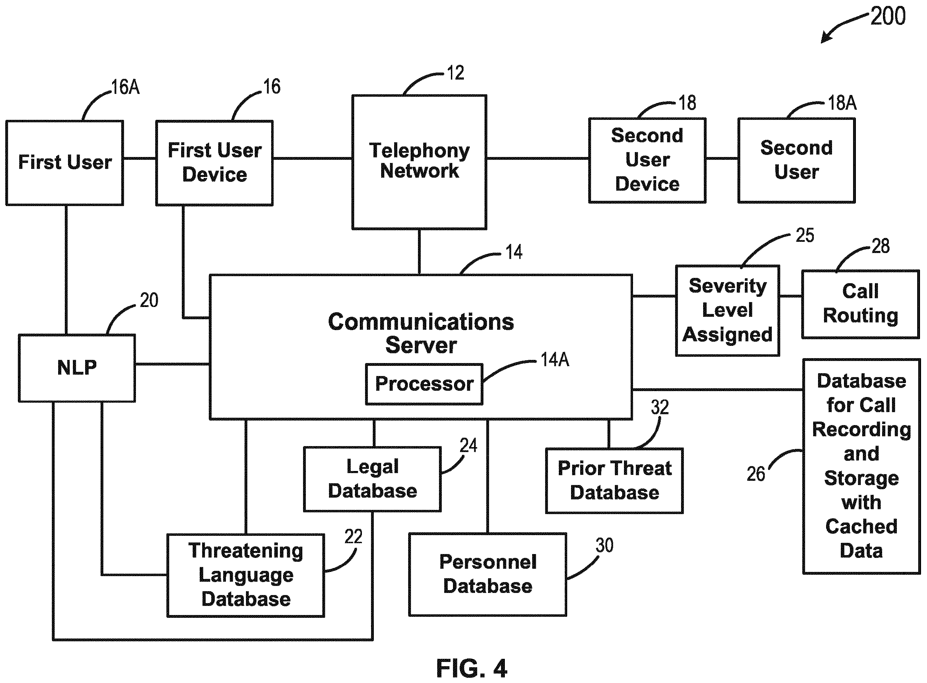

FIG. 4 is a block diagram of a system 200 in accordance with this disclosure. System 200 is the same as system 100 except that it further includes a personnel database 30 and a prior threat database 32. If a threatening and/or illegal call is identified by processor 14A, system 200 can potentially, by utilizing information related to the threatening and/or illegal call, determine whether the call is from a current or former employee or contractor of the organization by querying personnel database 30. Such information may include the name of the second user 18A, the phone number or IP address of the second user device 18, or the name associated with the second user device 18. Based on any information received from personnel database 30, processor 14A may adjust the severity level of the call. For example, the threatening and/or illegal call is determined to be from a disgruntled ex-employee or from an ex-employee or ex-contractor who was fired for cause, and/or who was known to dislike first user 16A, the severity level may be increased. Any information received from personnel database 30 may be included with the cached information stored in database 26 and/or may be sent to one or more silent listeners 28A, 28B, and 28C.

If a threatening and/or illegal call is identified by processor 14A, system 200 can potentially, by utilizing information related to the threatening and/or illegal call, determine whether the call is from a second user 18A who made a prior threat to first user 16A or to another person in the organization, by querying prior threat database 32. Such information may again include the name of the second user 18A, the phone number or IP address of the second user device 18, or the name associated with the second user device 18. Also, the location of the second user device 18 may also be utilized and the language used by second user 18 may be compared to language used in prior threatening and/or illegal calls to identify similar idiosyncrasies in speech. Based on any information received from prior threat database 32, processor 14A may adjust the severity level of the call, especially if the call is from a person who had made prior threatening and/or illegal calls, in which case the severity level may be increased. Any information received from prior threat database 32 may be included with the cached information stored in database 26 and/or may be sent to one or more silent listeners 28A, 28B, and 28C.

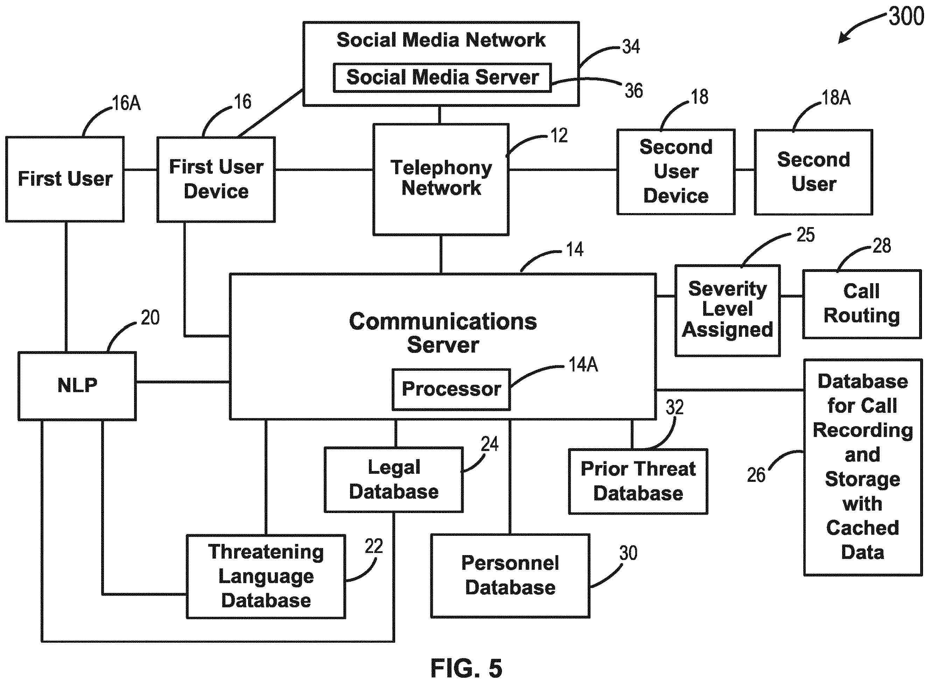

Prior threat database 32, via communications through communications server 14 or other communications, may collect information from one or more of prior calls in database 26, first user devices 16, and social media network 34 (shown in FIG. 5) to identify organization users that are suspected to be threatened. The information collected and stored in database 32 can include prior threatening and/or illegal calls, text messages, emails, and communications or other information from social media network 34. This collected information can be used by processor 14A to create a list of organizational users for monitoring.

FIG. 5 shows a system 300 in accordance with this disclosure. System 300 is the same as system 200 except that it is further configured to communicate with a social media network 34 having a social media server 36. Utilizing system 300, communications server 14, either directly or through first user device 16, can compare information, such as the name of the second user 18A, the phone number of the second user device 18, or the name associated with the second user device 18, to available information in the social media network 34. Processor 14A can determine if such call information is associated with a suspended or cancelled social media account, the name of the owner of the suspended or cancelled account, any relationship between first user 16A and second user 18A shown in the social media network 34, any communications between first user 16A and second user 18A on the social media network 34, or any comments about the organization made by second user 18A on social media network 34.

Based on any information received from social media network 34, processor 14A may adjust the severity level of the call, especially if the call is from a person who had made angry or threatening comments about first user 16A or the organization on social media network 34, or if second user 18A's account had been suspended or cancelled due to threatening or illegal activity. In any of those situations the severity level may be increased. Any information received from social media network 34 may be included with the cached information stored in database 26 and/or may be sent to one or more silent listeners 28A, 28B, and 28C.

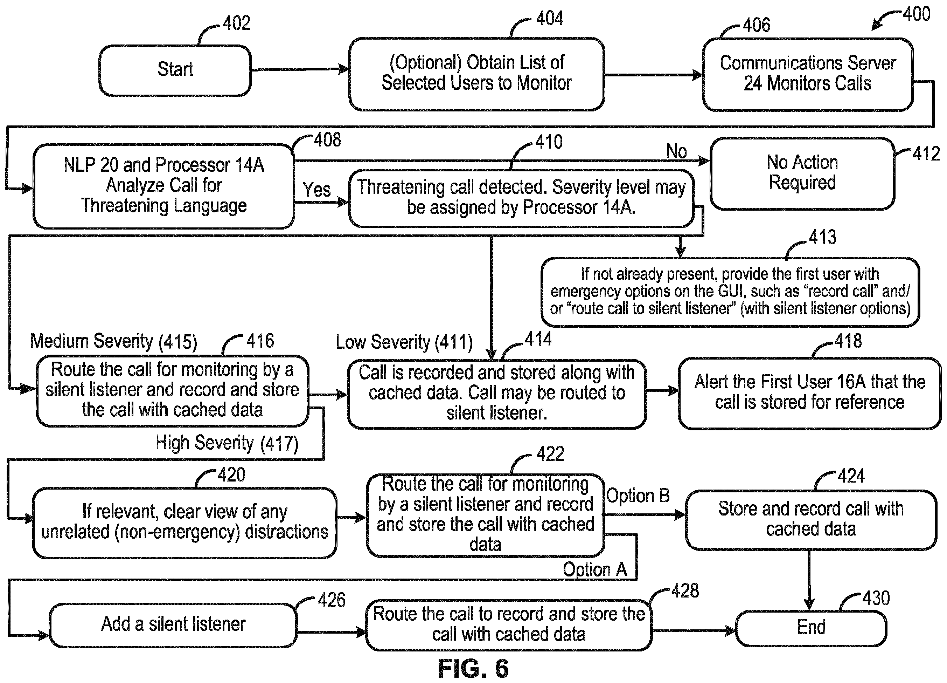

FIG. 6 is a block diagram of one process (or method) 400 according to aspects of this disclosure, with it being understood that systems of this disclosure may perform other methods and include additional method steps or may not include some of the method steps shown in FIG. 6. Process 400 starts (402) with obtaining (404) a list of selected users in the organization whose calls are automatically monitored (406) (preferably by communications server 14) by system 100, 200, or 300. Instead, all organizational members' calls could be automatically monitored, or any first user 16A could route a call to be monitored by a silent listener and/or be recorded and stored.

At step (408) the call is analyzed by NLP 20 and processor 14A for threatening (and/or illegal) language utilizing the threatening language database 22 and illegal language database 24. If the processor 14A determines that the call is not threatening and/or illegal, no action is required (412). If processor 14A detects (410) a threatening call, the processor 14A may assign a severity level of either low (411), medium (415), or high (417). In any of those cases, if emergency options are not already present on a graphical user interface (GUI) for the first user, the first user may be provided (413) emergency options on the GUI, such as "record call" and/or "route call to silent listener" (with multiple silent listener options). A threatening and/or illegal call may be forwarded to one or more silent listeners 28A, 28B, and 28C, and/or be recorded and stored along with related cached data (414), (416), and (422) in database 26. The first user 16 may receive (418) an alert that the call has been recorded and stored in database 26.

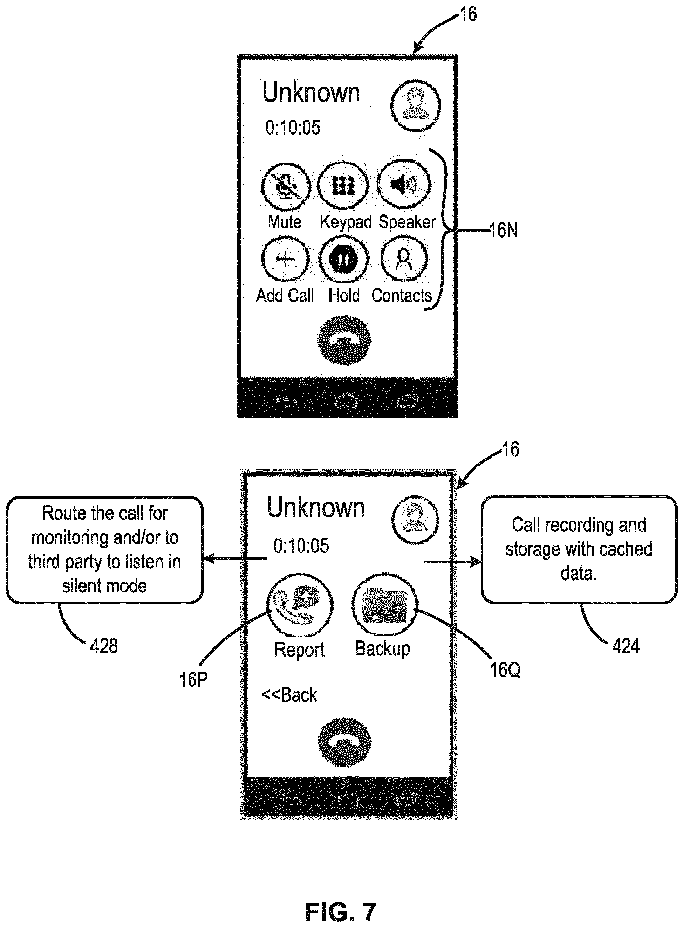

FIG. 7 shows two views of a first user device 16, which as shown is a cell phone. In the top view, first user device 16 is displaying ordinary commands 16N. In the bottom view, commands 16P, 16Q according to this disclosure. Using command 16P first user 16A can report a potential threatening and/or illegal call by sending it to one or more silent listeners 28A, 28B, and 28C (such as in step 428 of method 400). Using command 16Q first user 16A can send a threatening and/or illegal call to database 26 where it is recorded and stored (such as in step 424 of method 400).

The present invention has been described above with reference to a number of exemplary embodiments and examples. It should be appreciated that the particular embodiments shown and described herein are illustrative of the invention and its best mode and are not intended to limit in any way the scope of the invention as set forth in the claims. The features of the various embodiments may stand alone or be combined in any combination. Further, unless otherwise noted, various illustrated steps of a method can be performed sequentially or at the same time, and not necessarily be performed in the order illustrated. It will be recognized that changes and modifications may be made to the exemplary embodiments without departing from the scope of the present invention. The scope of the present invention is expressed in the following claims.

## Claims

1. A communication system (100) for identifying a threatening call, the communication system comprising:
a telephony network (12) configured to route calls;
a first user device (16) in communication with the telephony network, wherein the first user device is assigned to a first user who is an organization member;
a second user device (18) in communication with the telephony network, wherein the second user device is assigned to a second user who is not an organization member;
a communications server (14) in communication with the first user device;
a natural language processor, NLP (20), in communication with the communications server; and
a threatening language database (22), wherein the threatening language database is in communication with the communications server;
wherein when the second user device is in communication with the first user device through the telephony network the communications server is configured to monitor language used by the second user during the communication, and utilizing the NLP, to identify threatening language by comparing the language used by the second user to the threatening language in the threatening language database, **characterized in that** the communication system further comprises a social media database (36) in communication with the communications server that includes (a) identities of suspended social media accounts, (b) for each of the suspended social media accounts, the reason as to why it was suspended, (c) a name of an owner of the social media account, (d) content of threatening social media posts by the owner, and (e) content of posts by the owner that reference the first user,
and **in that** the communications server (14) is configured to assign a risk factor to the communication based on information in the social media database related to the second user and optionally one or more of (a) threatening language identified during the communication, (b) comparing the threatening language identified during the communication to information in a legal database related to unlawful language for telephonic communications and laws associated with the unlawful language, (c) information in a personnel database related to the second user, and (d) information in a prior-threat database related to the second user.

2. The communication system (100) of claim 1, wherein the communications server (14) is further configured to determine if the communication by the second user device is a threatening communication based on an amount and a type of threatening language identified and optionally wherein the communication system further includes a communication database in communication with the communications server, the communications server configured to save all or part of the communication from the second user device.

3. The communication system (100) of any preceding claim, wherein the communication system further comprises a personnel database (30) of former employees and/or former contractors of the organization, wherein the communications server is in communication with the personnel database and is configured to determine if the second user is a former employee or former contractor of the organization by comparing one or both of a phone number or name of the second user to the information in the personnel database.

4. The communication system (100) of any preceding claim, wherein the communication system further comprises a prior-threat database (32) of previous threatening communications and the name and phone number associated with each of the previous threatening communications, wherein the prior-threat database is in communication with the communications server and the communications server is further configured to compare a name and/or phone number associated with the previous threatening communications with a name of the second user and/or the phone number of the second user device to determine if there is a match.

5. The communication system (100) of any preceding claim, wherein if the communication is identified as threatening, and based on the risk factor assigned, the communication server is further configured to perform one or more of the following functions: (a) contact one or more of (i) a human resources department of the organization, (ii) a supervisor of the first user, and (iii) law enforcement; (b) permit access to the communication by one or more third user devices in communication with the telephony network, wherein each of the one or more third user devices is assigned to one or more of (i) a human resources department individual of the organization, (ii) a supervisor of the first user, and (iii) a law enforcement official, and wherein the access is without knowledge of the second user; and (c) permit the first user to send an emergency message utilizing a graphical user interface (GUI) connected to the communication system.

6. The communication system (100) of any preceding claim, wherein the communication system further includes a first user computing device and a recording device, wherein upon identifying a threatening communication the communications server is configured to display on the first user computing device a cached call for the first user, and the recording device records (a) the cached call spoken by the first user, and (b) the second user.

7. A method of identifying a threatening call by utilizing a communication system (100) including a telephony network (12) configured to route calls, a first user device (16) of a first user that is an organization member, wherein the first user device is in communication with the telephony network, and a communications server (14) in communication with the first user device, wherein the method comprises the steps of:
receiving, by the first user device, a communication through the telephony network from a second user device (18) operated by a second user who is not an organization member;
comparing, utilizing a NLP (20) in communication with the communications server and a threatening language database (22) in communication with the communications server, the language of the second user to language in the threatening language database;
based on the comparison, determining by the communications server whether the communication is a threatening communication, **characterized in that** the communication system further comprises a social media database (36) in communication with the communications server that includes (a) identities of suspended social media accounts, (b) for each of the suspended social media accounts, the reason as to why it was suspended, (c) a name of an owner of the social media account, (d) content of threatening social media posts by the owner, and (e) content of posts by the owner that reference the first user, and **in that** the method comprises the step of the communications server (14) assigning a risk factor to the communication based on information in the social media database related to the second user and optionally one or more of (a) threatening language identified during the communication, (b) comparing the threatening language identified during the communication to information in a legal database related to unlawful language for telephonic communications and laws associated with the unlawful language, (c) information in a personnel database related to the second user, and (d) information in a prior-threat database related to the second user.

8. The method of claim 7 further comprising the step of recording and storing a predefined length of the communication in a communication database.

9. The method of claim 7 or claim 8, that further comprises the step of storing in a communication database all threatening communications received by a set of first users designated by the organization and optionally wherein the communications for each of the set of first users are continually recorded and stored.

10. A communication system (100) for identifying a threatening call, the communication system comprising:
a telephony network (12) configured to route calls;
a first user device (16) in communication with the telephony network, wherein the first user device is assigned to a first user who is an organization member;
a second user device (18) in communication with the telephony network, wherein the second user device is assigned to a second user who is not an organization member;
a communications server (14) in communication with the first user device;
a natural language processor, NLP (20), in communication with the communications server; and
a threatening language database (22), wherein the threatening language database is in communication with the communications server;
wherein when the second user device is in communication with the first user device through the telephony network the communications server is configured to monitor language used by the second user during the communication, and utilizing the NLP, to identify threatening language by comparing the language used by the second user to the threatening language in the threatening language database, **characterized in that** the communication system further comprises a personnel database (30) of former employees and/or former contractors of the organization, wherein the communications server is in communication with the personnel database and is configured to determine if the second user is a former employee or former contractor of the organization by comparing one or both of a phone number or name of the second user to the information in the personnel database,
and **in that** the communications server (14) is configured to assign a risk factor to the communication based on information in the personnel database related to the second user and optionally one or more of (a) threatening language identified during the communication, (b) information in a social media database related to the second user, (c) comparing the threatening language identified during the communication to information in a legal database related to unlawful language for telephonic communications and laws associated with the unlawful language, and (d) information in a prior-threat database related to the second user.

11. A method of identifying a threatening call by utilizing a communication system (100) including a telephony network (12) configured to route calls, a first user device (16) of a first user that is an organization member, wherein the first user device is in communication with the telephony network, and a communications server (14) in communication with the first user device, wherein the method comprises the steps of:
receiving, by the first user device, a communication through the telephony network from a second user device (18) operated by a second user who is not an organization member;
comparing, utilizing a NLP (20) in communication with the communications server and a threatening language database (22) in communication with the communications server, the language of the second user to language in the threatening language database;
based on the comparison, determining by the communications server whether the communication is a threatening communication, **characterized in that** the communication system further comprises a personnel database (30) of former employees and/or former contractors of the organization, wherein the communications server is in communication with the personnel database and is configured to determine if the second user is a former employee or former contractor of the organization by comparing one or both of a phone number or name of the second user to the information in the personnel database,
and **in that** the method comprises the step of the communications server (14) assigning a risk factor to the communication based on information in the personnel database related to the second user and optionally one or more of (a) threatening language identified during the communication, (b) information in a social media database related to the second user, (c) comparing the threatening language identified during the communication to information in a legal database related to unlawful language for telephonic communications and laws associated with the unlawful language, and (d) information in a prior-threat database related to the second user.

## Patentansprüche

1. Kommunikationssystem (100) zum Identifizieren eines Drohanrufs, wobei das Kommunikationssystem Folgendes umfasst:
ein Telefonienetzwerk (12), das dazu konfiguriert ist, Anrufe zu leiten;
eine erste Benutzervorrichtung (16) in Kommunikation mit dem Telefonienetzwerk, wobei die erste Benutzervorrichtung einem ersten Benutzer zugewiesen ist, der ein Organisationsmitglied ist;
eine zweite Benutzervorrichtung (18) in Kommunikation mit dem Telefonienetzwerk, wobei die zweite Benutzervorrichtung einem zweiten Benutzer zugewiesen ist, der kein Organisationsmitglied ist;
einen Kommunikationsserver (14) in Kommunikation mit der ersten Benutzervorrichtung;
einen Prozessor für natürliche Sprache, NLP (20), in Kommunikation mit dem Kommunikationsserver; und
eine Drohsprachendatenbank (22), wobei die Drohsprachendatenbank in Kommunikation mit dem Kommunikationsserver steht;
wobei, wenn die zweite Benutzervorrichtung über das Telefonienetzwerk mit der ersten Benutzervorrichtung in Kommunikation steht, der Kommunikationsserver dazu konfiguriert ist, die durch den zweiten Benutzer während der Kommunikation verwendete Sprache zu überwachen und unter Verwendung des NLP Drohsprache durch Vergleichen der durch den zweiten Benutzer verwendeten Sprache mit der Drohsprache in der Drohsprachdatenbank zu identifizieren, **dadurch gekennzeichnet, dass** das Kommunikationssystem ferner eine Social-Media-Datenbank (36) in Kommunikation mit dem Kommunikationsserver umfasst, die (a) Identitäten von gesperrten Social-Media-Konten, (b) für jedes der gesperrten Social-Media-Konten den Grund, warum es gesperrt wurde, (c) einen Namen eines Eigentümers des Social-Media-Kontos, (d) Inhalte von bedrohlichen Social-Media-Posts durch den Eigentümer und (e) Inhalte von Posts durch den Eigentümer, die auf den ersten Benutzer verweisen, enthält,
und dass der Kommunikationsserver (14) dazu konfiguriert ist, der Kommunikation einen Risikofaktor zuzuweisen, basierend auf Informationen in der Social-Media-Datenbank, die sich auf den zweiten Benutzer beziehen, und optional einem oder mehreren von (a) Drohsprache, die während der Kommunikation identifiziert wurde, (b) Vergleichen der Drohsprache, die während der Kommunikation identifiziert wurde, mit Informationen in einer juristischen Datenbank, die sich auf rechtswidrige Sprache für telefonische Kommunikation und Gesetze, die der rechtswidrigen Sprache zugeordnet sind, beziehen, (c) Informationen in einer Personaldatenbank, die sich auf den zweiten Benutzer beziehen, und (d) Informationen in einer Frühere-Bedrohungen-Datenbank, die sich auf den zweiten Benutzer beziehen.

2. Kommunikationssystem (100) nach Anspruch 1, wobei der Kommunikationsserver (14) ferner dazu konfiguriert ist, basierend auf einer Menge und einer Art von identifizierter Drohsprache zu bestimmen, ob die Kommunikation durch die zweite Benutzervorrichtung eine Drohkommunikation ist, und wobei das Kommunikationssystem optional ferner eine Kommunikationsdatenbank in Kommunikation mit dem Kommunikationsserver enthält, wobei der Kommunikationsserver dazu konfiguriert ist, die gesamte oder einen Teil der Kommunikation von der zweiten Benutzervorrichtung zu speichern.

3. Kommunikationssystem (100) nach einem vorhergehenden Anspruch, wobei das Kommunikationssystem ferner eine Personaldatenbank (30) von ehemaligen Mitarbeitern und/oder ehemaligen Auftragnehmern der Organisation umfasst, wobei der Kommunikationsserver in Kommunikation mit der Personaldatenbank steht und dazu konfiguriert ist, durch Vergleichen eines oder beider von einer Telefonnummer oder einem Namen des zweiten Benutzers mit den Informationen in der Personaldatenbank zu bestimmen, ob der zweite Benutzer ein ehemaliger Mitarbeiter oder ehemaliger Auftragnehmer der Organisation ist.

4. Kommunikationssystem (100) nach einem vorhergehenden Anspruch, wobei das Kommunikationssystem ferner eine Frühere-Bedrohungen-Datenbank (32) vorheriger Drohkommunikationen und den Namen und die Telefonnummer, die jeder der vorherigen Drohkommunikationen zugeordnet sind, umfasst, wobei die Frühere-Bedrohungen-Datenbank in Kommunikation mit dem Kommunikationsserver steht und der Kommunikationsserver ferner dazu konfiguriert ist, einen Namen und/oder eine Telefonnummer, die den vorherigen Drohkommunikationen zugeordnet sind, mit einem Namen des zweiten Benutzers und/oder der Telefonnummer der zweiten Benutzervorrichtung zu vergleichen, um zu bestimmen, ob eine Übereinstimmung vorliegt.

5. Kommunikationssystem (100) nach einem vorhergehenden Anspruch, wobei, falls die Kommunikation als bedrohlich identifiziert ist und basierend auf dem zugewiesenen Risikofaktor, der Kommunikationsserver ferner dazu konfiguriert ist, eine oder mehrere der folgenden Funktionen durchzuführen: (a) Kontaktieren eines oder mehrerer von (i) einer Personalabteilung der Organisation, (ii) einem Vorgesetzten des ersten Benutzers und/oder (iii) den Strafverfolgungsbehörden; (b) Erlauben eines Zugriffs auf die Kommunikation durch ein oder mehrere Drittbenutzervorrichtungen in Kommunikation mit dem Telefonienetzwerk, wobei jede von der einen oder den mehreren dritten Benutzervorrichtungen einem oder mehreren von (i) einer Person in der Personalabteilung der Organisation, (ii) einem Vorgesetzten des ersten Benutzers und (iii) einem Strafverfolgungsbeamten zugewiesen ist und wobei der Zugriff ohne Wissen des zweiten Benutzers erfolgt; und (c) Erlauben, dass der erste Benutzer eine Notfallnachricht unter Verwendung einer grafischen Benutzerschnittstelle (GUI), die mit dem Kommunikationssystem verbunden ist, sendet.

6. Kommunikationssystem (100) nach einem vorhergehenden Anspruch, wobei das Kommunikationssystem ferner eine erste Benutzerrechenvorrichtung und eine Aufzeichnungsvorrichtung enthält, wobei nach Identifizieren einer Drohkommunikation der Kommunikationsserver dazu konfiguriert ist, auf der ersten Benutzerrechenvorrichtung einen zwischengespeicherten Anruf für den ersten Benutzer anzuzeigen, und die Aufzeichnungsvorrichtung (a) den zwischengespeicherten Anruf, der durch den ersten Benutzer gesprochen wird, und (b) den zweiten Benutzer aufzeichnet.

7. Verfahren zum Identifizieren eines Drohanrufs unter Verwendung eines Kommunikationssystems (100), das ein Telefonienetzwerk (12), das zum Leiten von Anrufen konfiguriert ist, eine erste Benutzervorrichtung (16) eines ersten Benutzers, der ein Organisationsmitglied ist, wobei die erste Benutzervorrichtung in Kommunikation mit dem Telefonienetzwerk steht, und einen Kommunikationsserver (14) in Kommunikation mit der ersten Benutzervorrichtung enthält, wobei das Verfahren die folgenden Schritte umfasst:
Empfangen einer Kommunikation über das Telefonienetzwerk von einer zweiten Benutzervorrichtung (18), die durch einen zweiten Benutzer betrieben wird, der kein Organisationsmitglied ist, durch die erste Benutzervorrichtung;
Vergleichen, unter Verwendung eines NLP (20) in Kommunikation mit dem Kommunikationsserver und einer Drohsprachendatenbank (22) in Kommunikation mit dem Kommunikationsserver, der Sprache des zweiten Benutzers mit der Sprache in der Drohsprachendatenbank;
basierend auf dem Vergleichen, Bestimmen durch den Kommunikationsserver, ob die Kommunikation eine Drohkommunikation ist, **dadurch gekennzeichnet, dass** das Kommunikationssystem ferner eine Social-Media-Datenbank (36) in Kommunikation mit dem Kommunikationsserver umfasst, die (a) Identitäten von gesperrten Social-Media-Konten, (b) für jedes der gesperrten Social-Media-Konten den Grund, warum es gesperrt wurde, (c) einen Namen eines Eigentümers des Social-Media-Kontos, (d) Inhalte von bedrohlichen Social-Media-Posts durch den Eigentümer und (e) Inhalte von Posts durch den Eigentümer, die auf den ersten Benutzer verweisen, enthält,
und dadurch, dass das Verfahren den Schritt eines Zuweisens durch den Kommunikationsserver (14) eines Risikofaktors für die Kommunikation umfasst, basierend auf Informationen in der Social-Media-Datenbank, die sich auf den zweiten Benutzer beziehen, und optional einem oder mehreren von (a) Drohsprache, die während der Kommunikation identifiziert wurde, (b) Vergleichen der Drohsprache, die während der Kommunikation identifiziert wurde, mit Informationen in einer juristischen Datenbank, die sich auf rechtswidrige Sprache für telefonische Kommunikation und Gesetze, die der rechtswidrigen Sprache zugeordnet sind, beziehen, (c) Informationen in einer Personaldatenbank, die sich auf den zweiten Benutzer beziehen, und (d) Informationen in einer Frühere-Bedrohungen-Datenbank, die sich auf den zweiten Benutzer beziehen.

8. Verfahren nach Anspruch 7, ferner umfassend den Schritt eines Aufzeichnens und Speicherns einer vordefinierten Länge der Kommunikation in einer Kommunikationsdatenbank.

9. Verfahren nach Anspruch 7 oder Anspruch 8, das ferner den Schritt eines Speicherns aller Drohkommunikationen, die durch einen Satz von ersten Benutzern empfangen werden, die durch die Organisation bestimmt werden, in einer Kommunikationsdatenbank umfasst, und optional wobei die Kommunikationen für jeden aus dem Satz von ersten Benutzern kontinuierlich aufgezeichnet und gespeichert werden.

10. Kommunikationssystem (100) zum Identifizieren eines Drohanrufs, wobei das Kommunikationssystem Folgendes umfasst:
ein Telefonienetzwerk (12), das dazu konfiguriert ist, Anrufe zu leiten;
eine erste Benutzervorrichtung (16) in Kommunikation mit dem Telefonienetzwerk, wobei die erste Benutzervorrichtung einem ersten Benutzer zugewiesen ist, der ein Organisationsmitglied ist;
eine zweite Benutzervorrichtung (18) in Kommunikation mit dem Telefonienetzwerk, wobei die zweite Benutzervorrichtung einem zweiten Benutzer zugewiesen ist, der kein Organisationsmitglied ist;
einen Kommunikationsserver (14) in Kommunikation mit der ersten Benutzervorrichtung;
einen Prozessor für natürliche Sprache, NLP (20), in Kommunikation mit dem Kommunikationsserver; und
eine Drohsprachendatenbank (22), wobei die Drohsprachendatenbank in Kommunikation mit dem Kommunikationsserver steht;
wobei, wenn die zweite Benutzervorrichtung über das Telefonienetzwerk mit der ersten Benutzervorrichtung in Kommunikation steht, der Kommunikationsserver dazu konfiguriert ist, die durch den zweiten Benutzer während der Kommunikation verwendete Sprache zu überwachen und unter Verwendung des NLP Drohsprache durch Vergleichen der durch den zweiten Benutzer verwendeten Sprache mit der Drohsprache in der Drohsprachdatenbank zu identifizieren, **dadurch gekennzeichnet, dass** das Kommunikationssystem ferner eine Personaldatenbank (30) von ehemaligen Mitarbeitern und/oder ehemaligen Auftragnehmern der Organisation umfasst, wobei der Kommunikationsserver in Kommunikation mit der Personaldatenbank steht und dazu konfiguriert ist, durch Vergleichen eines oder beider von einer Telefonnummer oder einem Namen des zweiten Benutzers mit den Informationen in der Personaldatenbank zu bestimmen, ob der zweite Benutzer ein ehemaliger Mitarbeiter oder ehemaliger Auftragnehmer der Organisation ist,
und dass der Kommunikationsserver (14) dazu konfiguriert ist, der Kommunikation einen Risikofaktor zuzuweisen, basierend auf Informationen in der Personaldatenbank, die sich auf den zweiten Benutzer beziehen, und optional einem oder mehreren von (a) Drohsprache, die während der Kommunikation identifiziert wurde, (b) Informationen in einer Social-Media-Datenbank, die sich auf den zweiten Benutzer beziehen, (c) Vergleichen der Drohsprache, die während der Kommunikation identifiziert wurde, mit Informationen in einer juristischen Datenbank, die sich auf rechtswidrige Sprache für telefonische Kommunikation und Gesetze, die der rechtswidrigen Sprache zugeordnet sind, beziehen, und (d) Informationen in einer Frühere-Bedrohungen-Datenbank, die sich auf den zweiten Benutzer beziehen.

11. Verfahren zum Identifizieren eines Drohanrufs unter Verwendung eines Kommunikationssystems (100), das ein Telefonienetzwerk (12), das zum Leiten von Anrufen konfiguriert ist, eine erste Benutzervorrichtung (16) eines ersten Benutzers, der ein Organisationsmitglied ist, wobei die erste Benutzervorrichtung in Kommunikation mit dem Telefonienetzwerk steht, und einen Kommunikationsserver (14) in Kommunikation mit der ersten Benutzervorrichtung enthält, wobei das Verfahren die folgenden Schritte umfasst:
Empfangen einer Kommunikation über das Telefonienetzwerk von einer zweiten Benutzervorrichtung (18), die durch einen zweiten Benutzer betrieben wird, der kein Organisationsmitglied ist, durch die erste Benutzervorrichtung;
Vergleichen, unter Verwendung eines NLP (20) in Kommunikation mit dem Kommunikationsserver und einer Drohsprachendatenbank (22) in Kommunikation mit dem Kommunikationsserver, der Sprache des zweiten Benutzers mit der Sprache in der Drohsprachendatenbank;
basierend auf dem Vergleichen, Bestimmen durch den Kommunikationsserver, ob die Kommunikation eine Drohkommunikation ist, **dadurch gekennzeichnet, dass** das Kommunikationssystem ferner eine Personaldatenbank (30) von ehemaligen Mitarbeitern und/oder ehemaligen Auftragnehmern der Organisation umfasst, wobei der Kommunikationsserver in Kommunikation mit der Personaldatenbank steht und dazu konfiguriert ist, durch Vergleichen eines oder beider von einer Telefonnummer oder einem Namen des zweiten Benutzers mit den Informationen in der Personaldatenbank zu bestimmen, ob der zweite Benutzer ein ehemaliger Mitarbeiter oder ehemaliger Auftragnehmer der Organisation ist,
und dadurch, dass das Verfahren den Schritt eines Zuweisens durch den Kommunikationsserver (14) eines Risikofaktors für die Kommunikation umfasst, basierend auf Informationen in der Personaldatenbank, die sich auf den zweiten Benutzer beziehen, und optional einem oder mehreren von (a) Drohsprache, die während der Kommunikation identifiziert wurde, (b) Informationen in einer Social-Media-Datenbank, die sich auf den zweiten Benutzer beziehen, (c) Vergleichen der Drohsprache, die während der Kommunikation identifiziert wurde, mit Informationen in einer juristischen Datenbank, die sich auf rechtswidrige Sprache für telefonische Kommunikation und Gesetze, die der rechtswidrigen Sprache zugeordnet sind, beziehen, und (d) Informationen in einer Frühere-Bedrohungen-Datenbank, die sich auf den zweiten Benutzer beziehen.

## Revendications

1. Système de communication (100) pour identifier un appel de menace, le système de communication comprenant :
un réseau téléphonique (12) configuré pour acheminer des appels ;
un premier dispositif utilisateur (16) en communication avec le réseau téléphonique, ledit premier dispositif utilisateur étant attribué à un premier utilisateur qui est un membre de l'organisation ;
un deuxième dispositif utilisateur (18) en communication avec le réseau téléphonique, ledit deuxième dispositif utilisateur étant attribué à un second utilisateur qui n'est pas un membre de l'organisation ;
un serveur de communication (14) en communication avec le premier dispositif utilisateur ;
un processeur de langage naturel, NLP (20), en communication avec le serveur de communication ; et
une base de données de langage de menace (22), ladite base de données de langage de menace étant en communication avec le serveur de communication ;
lorsque le deuxième dispositif utilisateur est en communication avec le premier dispositif utilisateur par l'intermédiaire du réseau téléphonique, ledit serveur de communication étant configuré pour surveiller le langage utilisé par le second utilisateur durant la communication, et l'utilisation du NLP pour identifier le langage de menace en comparant le langage utilisé par le second utilisateur au langage de menace dans la base de données de langage de menace, **caractérisé en ce que** le système de communication comprend en outre une base de données de médias sociaux (36) en communication avec le serveur de communication qui comprend (a) des identités de comptes de médias sociaux suspendus, (b) pour chacun des comptes de médias sociaux suspendus, la raison pour laquelle il a été suspendu, (c) un nom d'un propriétaire du compte de médias sociaux, (d) un contenu de publications de médias sociaux de menace par le propriétaire, et (e) un contenu de publications par le propriétaire qui font référence au premier utilisateur,
et **en ce que** le serveur de communication (14) est configuré pour attribuer un facteur de risque à la communication sur la base d'informations dans la base de données de médias sociaux relatives au second utilisateur et éventuellement un ou plusieurs parmi (a) un langage de menace identifié durant la communication, (b) la comparaison du langage de menace identifié durant la communication à des informations dans une base de données légale relatives à un langage illégal pour des communications téléphoniques et des lois associées au langage illégal, (c) des informations dans une base de données de personnel relatives au second utilisateur, et (d) des informations dans une base de données de menaces antérieures relatives au second utilisateur.

2. Système de communication (100) de la revendication 1, ledit serveur de communication (14) étant en outre configuré pour déterminer si la communication par le second dispositif utilisateur est une communication de menace sur la base d'une quantité et d'un type de langage de menace identifié et éventuellement ledit système de communication comprenant en outre une base de données de communication en communication avec le serveur de communication, le serveur de communication étant configuré pour sauvegarder tout ou partie de la communication provenant du second dispositif utilisateur.

3. Système de communication (100) d'une quelconque revendication précédente, ledit système de communication comprenant en outre une base de données de personnel (30) d'anciens employés et/ou d'anciens sous-traitants de l'organisation, ledit serveur de communication étant en communication avec la base de données de personnel et étant configuré pour déterminer si le second utilisateur est un ancien employé ou un ancien sous-traitant de l'organisation en comparant un ou les deux d'un numéro de téléphone ou d'un nom du second utilisateur aux informations dans la base de données de personnel.

4. Système de communication (100) d'une quelconque revendication précédente, ledit système de communication comprenant en outre une base de données de menaces antérieures (32) de communications de menace précédentes et le nom et le numéro de téléphone associés à chacune des communications de menaces précédentes, ladite base de données de menaces antérieures étant en communication avec le serveur de communication et ledit serveur de communication étant en outre configuré pour comparer un nom et/ou un numéro de téléphone associés aux communications de menace précédentes avec un nom du second utilisateur et/ou le numéro de téléphone du second dispositif utilisateur pour déterminer si une correspondance existe.

5. Système de communication (100) d'une quelconque revendication précédente, si la communication est identifiée comme menaçante, et sur la base du facteur de risque attribué, le serveur de communication est en outre configuré pour exécuter une ou plusieurs des fonctions suivantes : (a) contacter un ou plusieurs parmi (i) un département des ressources humaines de l'organisation, (ii) un superviseur du premier utilisateur, et (iii) une application de la loi ; (b) permettre l'accès à la communication par un ou plusieurs dispositifs tiers utilisateur en communication avec le réseau téléphonique, chacun du ou des dispositifs tiers utilisateur étant attribué à un ou plusieurs parmi (i) un individu du département des ressources humaines de l'organisation, (ii) un superviseur du premier utilisateur, et (iii) un responsable de l'application de la loi, et ledit accès étant sans connaissance du second utilisateur ; et (c) permettre au premier utilisateur d'envoyer un message d'urgence en utilisant une interface utilisateur graphique (GUI) connectée au système de communication.

6. Système de communication (100) d'une quelconque revendication précédente, ledit système de communication comprenant en outre un premier dispositif informatique utilisateur et un dispositif d'enregistrement, lors de l'identification d'une communication de menace ledit serveur de communication étant configuré pour afficher sur le premier dispositif informatique utilisateur un appel mis en antémémoire pour le premier utilisateur, et ledit dispositif d'enregistrement enregistrant (a) l'appel mis en antémémoire prononcé par le premier utilisateur, et (b) le second utilisateur.

7. Procédé d'identification d'un appel de menace à l'aide d'un système de communication (100) comprenant un réseau téléphonique (12) configuré pour acheminer des appels, un premier dispositif utilisateur (16) d'un premier utilisateur qui est un membre de l'organisation, ledit premier dispositif utilisateur étant en communication avec le réseau téléphonique, et un serveur de communication (14) en communication avec ledit premier dispositif utilisateur, ledit procédé comprenant les étapes de :
réception, par le premier dispositif utilisateur, d'une communication à travers le réseau téléphonique à partir d'un deuxième dispositif utilisateur (18) exploité par un second utilisateur qui n'est pas un membre de l'organisation ; comparaison, à l'aide d'un NLP (20) en communication avec le serveur de communication et d'une base de données de langage de menace (22) en communication avec le serveur de communication, du langage du second utilisateur au langage dans la base de données de langage de menace ;
sur la base de la comparaison, la détermination par le serveur de communications pour savoir si la communication est une communication de menace, **caractérisé en ce que** le système de communication comprend en outre une base de données de médias sociaux (36) en communication avec le serveur de communications qui comprend (a) des identités de comptes de médias sociaux suspendus, (b) pour chacun des comptes de médias sociaux suspendus, la raison pour laquelle il a été suspendu, (c) un nom d'un propriétaire du compte de médias sociaux, (d) un contenu de publications de médias sociaux de menace par le propriétaire, et (e) un contenu de publications par le propriétaire qui font référence au premier utilisateur, et **en ce que** le procédé comprend l'étape du serveur de communication (14) attribuant un facteur de risque à la communication sur la base d'informations dans la base de données de médias sociaux relatives au
second utilisateur et éventuellement un ou plusieurs parmi (a) un langage de menace identifié durant la communication, (b) la comparaison du langage de menace identifié durant la communication à des informations dans une base de données légale relatives à un langage illégal pour des communications téléphoniques et des lois associées au langage illégal, (c) des informations dans une base de données de personnel relatives au second utilisateur, et (d) des informations dans une base de données de menaces antérieures relatives au second utilisateur.

8. Procédé de la revendication 7, comprenant en outre l'étape d'enregistrement et de stockage d'une longueur prédéfinie de la communication dans une base de données de communication.

9. Procédé de la revendication 7 ou de la revendication 8, qui comprend en outre l'étape de stockage dans une base de données de communication de toutes les communications de menace reçues par un ensemble de premiers utilisateurs désignés par l'organisation et éventuellement lesdites communications pour chacun de l'ensemble de premiers utilisateurs étant enregistrées et stockées en continu.

10. Système de communication (100) pour identifier un appel de menace, le système de communication comprenant :
un réseau téléphonique (12) configuré pour acheminer des appels ;
un premier dispositif utilisateur (16) en communication avec le réseau téléphonique, ledit premier dispositif utilisateur étant attribué à un premier utilisateur qui est un membre de l'organisation ;
un deuxième dispositif utilisateur (18) en communication avec le réseau téléphonique, ledit deuxième dispositif utilisateur étant attribué à un second utilisateur qui n'est pas un membre de l'organisation ;
un serveur de communication (14) en communication avec le premier dispositif utilisateur ;
un processeur de langage naturel, NLP (20), en communication avec le serveur de communication ; et
une base de données de langage de menace (22), ladite base de données de langage de menace étant en communication avec le serveur de communication ;
lorsque le second dispositif utilisateur est en communication avec le premier dispositif utilisateur par l'intermédiaire du réseau téléphonique, ledit serveur de communication étant configuré pour surveiller le langage utilisé par le second utilisateur durant la communication, et l'utilisation du NLP, pour identifier un langage de menace en comparant le langage utilisé par le second utilisateur au langage de menace dans la base de données de langage de menace, **caractérisé en ce que** le système de communication comprend en outre une base de données de personnel (30) d'anciens employés et/ou d'anciens sous-traitants de l'organisation, ledit serveur de communication étant en communication avec la base de données de personnel et étant configuré pour déterminer si le second utilisateur est un ancien employé ou un ancien sous-traitant de l'organisation en comparant l'un ou les deux d'un numéro de téléphone ou d'un nom du second utilisateur aux informations dans la base de données de personnel,
et **en ce que** le serveur de communication (14) est configuré pour attribuer un facteur de risque à la communication sur la base d'informations dans la base de données de personnel relatives au second utilisateur et éventuellement un ou plusieurs parmi (a) un langage de menace identifié durant la communication, (b) des informations dans une base de données de médias sociaux relatives au second utilisateur, (c) la comparaison du
langage de menace identifié durant la communication à des informations dans une base de données légale relatives à un langage illégal pour des communications téléphoniques et des lois associées au langage illégal, et (d) des informations dans une base de données de menaces antérieures relatives au second utilisateur.

11. Procédé d'identification d'un appel de menace à l'aide d'un système de communication (100) comprenant un réseau téléphonique (12) configuré pour acheminer des appels, un premier dispositif utilisateur (16) d'un premier utilisateur qui est un membre de l'organisation, ledit premier dispositif utilisateur étant en communication avec le réseau téléphonique, et un serveur de communication (14) en communication avec ledit premier dispositif utilisateur, ledit procédé comprenant les étapes de :
réception, par le premier dispositif utilisateur, d'une communication à travers le réseau téléphonique à partir d'un deuxième dispositif utilisateur (18) exploité par un second utilisateur qui n'est pas un membre de l'organisation ; comparaison, à l'aide d'un NLP (20) en communication avec le serveur de communication et d'une base de données de langage de menace (22) en communication avec le serveur de communication, du langage du second utilisateur au langage dans la base de données de langage de menace ;
sur la base de la comparaison, la détermination par le serveur de communications pour savoir si la communication est une communication de menace, **caractérisé en ce que** le système de communication comprend en outre une base de données de personnel (30) d'anciens employés et/ou d'anciens sous-traitants de l'organisation, ledit serveur de communication étant en communication avec la base de données de personnel et étant configuré pour déterminer si le second utilisateur est un ancien employé ou un ancien sous-traitant de l'organisation en comparant l'un ou les deux d'un numéro de téléphone ou d'un nom du second utilisateur aux informations dans la base de données de personnel, et **en ce que** le procédé comprend l'étape du serveur de communication (14) attribuant un facteur de risque à la communication sur la base d'informations dans la base de données de personnel relatives au second utilisateur et éventuellement un ou plusieurs parmi (a) un langage de menace identifié durant la communication, (b) des informations dans une base de données de médias sociaux relatives au second utilisateur, (c) la comparaison du langage de menace identifié durant la communication à des informations dans une base de données légale relatives à un langage illégal pour des communications téléphoniques et des lois associées au langage illégal, et (d) des informations dans une base de données de menaces antérieures relatives au second utilisateur.
